# EUROPÄISCHE PATENTSCHRIFT

(11) **EP 3 574 202 B1**
(45) Veröffentlichungstag und Bekanntmachung des Hinweises auf die Patenterteilung: **23.06.2021**
(21) Anmeldenummer: 18702601.8
(22) Anmeldetag: 24.01.2018
(51) Int. Cl.: F02F 3/00, F02F 3/12, B23K 103/20, B23K 101/00

(54) **KOLBEN ZUM EINSATZ IN VERBRENNUNGSKRAFTMASCHINEN**
PISTON FOR USE IN INTERNAL COMBUSTION ENGINES
PISTON DESTINÉ À ÊTRE UTILISÉ DANS DES MOTEURS À COMBUSTION INTERNE

(30) Priorität: 26.01.2017 AT 500562017
(43) Veröffentlichungstag der Anmeldung: 04.12.2019
(73) Patentinhaber: Mahle König Kommanditgesellschaft GmbH & Co KG, 6830 Rankweil (AT)
(72) Erfinder: HERB, Thomas, 87452 Altusried (DE); BECHTER, Christian, 6923 Lauterach (AT); PAPRATOVIC, Stefan, 6830 Rankweil (AT)
(74) Vertreter: Wildhack & Jellinek
(86) Internationale Anmeldenummer: PCT/AT2018/060021
(87) Internationale Veröffentlichungsnummer: WO 2018/136985

(56) Entgegenhaltungen:
- EP-A- 0 366 410
- EP-A1- 1 231 286
- JP-A- H04 109 067
- JP-A- H11 315 973

## Beschreibung

Die Erfindung betrifft einen Kolben zum Einsatz in Verbrennungskraftmaschinen gemäß dem Oberbegriff des Patentanspruchs 1, ein Zwischenstück gemäß dem Patentanspruch 12 sowie ein Verfahren zur Herstellung eines Kolbens gemäß dem Patentanspruch 14.

Die derzeitigen Entwicklungstrends in der Automobilindustrie sowie auch in Hochleistungsmotoren liegen in effizienteren und damit in Wirkungsgrad optimierten Motoren bzw. Verbrennungskraftmaschinen. Diese Zielvorgabe impliziert neue thermodynamische Entwicklungsansätze wie Magerverbrennverfahren und Downsizing-Konzepte durch welche die Temperaturen und Spitzendrücke im Brennraum von Motoren steigen und somit die Anforderungen an die Motorenbauteile insgesamt erhöht werden. Thermodynamisch bieten diese Entwicklungsansätze ein signifikantes Wirkungsgradsteigerungspotential, welches jedoch mit steigenden Anforderungen an die Kolbenbaugruppe und den Kolbenwerkstoff einhergeht.

Aus dem Stand der Technik sind vor allem Aluminium-Silizium-Kolben weit verbreitet, da diese bei verhältnismäßig geringem Gewicht eine hohe Festigkeit bieten. In den letzten Jahren war jedoch der Entwicklungstrend, insbesondere bei hoch belastenden Verbrennungskraftmaschinen, in Richtung Stahlkolben zu sehen, da diese eine erhöhte Festigkeit bzw. höhere Temperaturbeständigkeit bieten und damit im Verhältnis zu Aluminium-Silizium-Kolben stärkeren Verbrennungsdrücken und Verbrennungstemperaturen standhalten können. Die derzeit immer höher werdenden Anforderungen durch immer strengere Abgasvorschriften und höhere angestrebte Effizienzsteigerungen führen zwangsläufig zu Brennverfahren mit erhöhten thermischen Belastungen und hohen Spitzendrücken. Um den höheren Spitzendrücken standhalten zu können, werden die Anforderungen an die Festigkeit der Kolbengruppe erhöht, wodurch die Entwicklung der letzten Jahre bei hoch belasteten Verbrennungskraftmaschinen in Richtung Stahlkolben geht. Nachteil der Stahlkolben ist deren höhere Dichte, die bei immer höheren Drehzahlen bzw. bei hoch drehenden Serienapplikationen zu hohen Massenkräften führt. Durch die höhere Festigkeit der Stahllegierungen kann allerdings die Geometrie der Kolben angepasst werden und so ein Teil des höheren Gewichts kompensiert werden. Insbesondere bei Zweitaktkolben kann der Gewichtsnachteil bei der Substitution des Werkstoffs Aluminium durch Stahl jedoch nur bedingt kompensiert werden, da beim Zweitaktarbeitsprozess die Geometrie des Kolbenhemds und somit die Kolbenhöhe durch das Arbeitsverfahren zwangsläufig vorgegeben ist, sodass eine Gewichtskompensation durch Reduktion der Bauhöhe oder der Wandstärken nur in sehr engen Bereichen möglich ist.

Weiters sind aus dem Stand der Technik Kolben aus zwei unterschiedlichen Materialien bekannt, bei denen die unterschiedlichen Materialien bzw. die Teile des Kolbens aus unterschiedlichen Materialien mit formschlüssigen Verbindungen verbunden werden. Nachteil dieser Kolben ist allerdings, dass durch die formschlüssige Verbindung keine Gasdichtheit erreicht wird und insbesondere bei hohen vorherrschenden Verbrennungsdrücken eine hohe Leistungsreduktion durch in das Kolbeninnere durchströmende Verbrennungsgase hervorgerufen wird. JPH04109067 A, EP0366410 A und EP 1231286 A1 offenbaren Kolben aus zwei unterschiedlichen Materialien. JPH11 315973 A offenbart ein Zwischengefügestück zum Verbinden verschiedener Stahllegierungen.

Aufgabe der vorliegenden Erfindung ist es daher, einen Kolben der eingangs genannten Art bereit zu stellen, der einerseits hohe Spitzendrücke und thermische Belastungen standhält und andererseits geringe Massenkräfte und eine hohe thermische Leitfähigkeit bereitstellt.

Diese Aufgabe wird durch die kennzeichnenden Merkmale des Anspruchs 1 gelöst. Dabei ist vorgesehen, dass die Kolbenkrone und das Kolbenhemd an zumindest einer Fügestelle stoffschlüssig miteinander verbunden sind, wobei die Kolbenkrone aus einer Stahllegierung besteht und das Kolbenhemd aus einer Aluminiumlegierung oder einer Aluminiumsiliziumlegierung besteht. Weiters weist der Kolben ein, insbesondere ringförmiges, Zwischenfügestück auf, das zwischen Kolbenhemd und Kolbenkrone angeordnet ist. Das Zwischenfügestück weist ein erstes Ende und ein zweites Ende auf, wobei das Zwischenfügestück vom ersten Ende zum zweiten Ende einen Werkstoffgradienten vom Werkstoff der Kolbenkrone zum Werkstoff des Kolbenhemdes aufweist, wobei das Zwischenfügestück mit dem ersten Ende, das den Werkstoff der Kolbenkrone aufweist, mit der Kolbenkrone an einer ersten Fügestelle stoffschlüssig verbunden ist, und wobei das Zwischenfügestück mit dem zweiten Ende, das den Werkstoff des Kolbenhemdes aufweist, mit dem Kolbenhemd an einer zweiten Fügestelle stoffschlüssig verbunden ist.

Durch die Ausbildung der Kolbenkrone aus einem höherfesten bzw. spezifisch dichteren Werkstoff als das Kolbenhemd wird einerseits die Kolbenkrone an die hohen Spitzendrücke im Kolbenraum angepasst und ermöglich daher eine Steigerung der Verbrennungstemperatur unter Verbrennungsdrücke im Verbrennungsmotor. Stahllegierungen ermöglichen eine hohe Festigkeit und hohe Temperaturbeständigkeit der Kolbenkrone des Kolbens und ermöglichen es derart, hohe Spitzendrücke und Verbrennungstemperaturen im Kolbenraum vorzusehen. Andererseits wird durch das Kolbenhemd aus einem geringer festen Werkstoff, der spezifisch weniger dicht als der Werkstoff der Kolbenkrone ist, eine Reduktion der Gesamtmasse des Kolbens erreicht und damit die Massenkräfte auf die Kolbenbaugruppe, insbesondere bei hohen Drehzahlen, reduziert. Durch die Aluminiumlegierung oder die Aluminiumsiliziumlegierung kann das Gewicht des Kolbenhemdes und damit das Gesamtgewicht des Kolbens deutlich reduziert werden.

Durch die Vorsehung des Zwischenfügestücks, das zwischen dem Kolbenhemd und der Kolbenkrone angeordnet ist, kann der Werkstoffgradient einfach hergestellt werden und die Verbindung zwischen Kolbenhemd und Kolbenkrone besonders sicher und vorteilhaft erzielt werden.

Weiters wird durch die stoffschlüssige Verbindung der Kolbenkrone mit dem Kolbenhemd eine absolute Gasdichtheit erreicht und so Leistungsreduktionen der Verbrennungskraftmaschine aufgrund den Kolben durchströmender Verbrennungsgase vermieden.

Besonders vorteilhafte Ausführungsformen des Kolben werden durch die Merkmale der abhängigen Ansprüche näher definiert:
Eine bevorzugte Ausbildung des Kolbens wird bereitgestellt, indem die Kolbenkrone aus einem Stahl aus der Gruppe MoCr4, 42CrMo4, CrMo4, 31CrMoV6 oder 25MoCr4besteht. Diese Stahllegierungen ermöglichen eine hohe Festigkeit und hohe Temperaturbeständigkeit der Kolbenkrone des Kolbens und ermöglichen es derart, hohe Spitzendrücke und Verbrennungstemperaturen im Kolbenraum vorzusehen.

Um das Gesamtgewicht des Kolbens weiter zu reduzieren bzw. geeignete Werkstoffe für das Kolbenhemd bereit zu stellen, ist vorgesehen, dass das Kolbenhemd aus einer Aluminiumlegierung oder einer Aluminiumsiliziumlegierung aus der Gruppe AlSi12CuMgNi, AlSi16CuMgNi, AlSi18CuMgNi, AlSi25CuMgNi, AlSi12Cu3Ni2Mg oder AlSi15Cu3Ni2Mg besteht. Durch die bereits bei Kolben bewährten Aluminium-Silizium-Legierungen kann das Gewicht des Kolbenhemdes und damit das Gesamtgewicht des Kolbens deutlich reduziert werden und so die freien Massenkräfte der Kolbenbaugruppe und damit die Massenkräfte, beispielsweise auf den Kolbenbolzen, das Pleuel oder die Kurbelwelle, reduziert werden.

Um das Kolbenhemd mit der Kolbenkrone einfach zu verbinden, kann vorgesehen sein, dass der Kolben, vorzugsweise das Kolbenhemd oder die Kolbenkrone im Bereich der Fügestelle einen Werkstoffgradienten vom Werkstoff des Kolbenhemdes zum Werkstoff der Kolbenkrone aufweist. Durch den Werkstoffgradienten, der an der Fügestelle zwischen der Kolbenkrone und dem Kolbenhemd vorgesehen ist, können diese vorteilhaft stoffschlüssig verbunden werden und insbesondere bei Werkstoffen, die nur schwer stoffschlüssig verbindbar sind, eine stoffschlüssige Verbindung der Kolbenkrone mit dem Kolbenhemd erreicht werden. Als Werkstoffgradient wird hier verstanden, dass entlang eines gewissen Abschnittes des Kolbens ein Werkstoff, beispielsweise Aluminium, erst zu 100% vorliegt und dann prozentuell im Werkstoff reduziert wird und eine Mischung zwischen dem ersten Werkstoff und dem zweiten Werkstoff vorliegt und dann der zweite Werkstoff bzw. höher festere Werkstoff weiter erhöht wird und dann an einem anderen Ende oder Bereich zu 100% vorliegt.

Um die Verbindung des Kolbenhemdes des Zwischenstücks und der Kolbenkrone besonders einfach und sicher herstellen zu können, kann vorgesehen sein, dass die Kolbenkrone und/oder das Kolbenhemd eine dem Zwischenfügestück gegengleich ausgebildete Ausnehmung aufweist, die dem Zwischenfügestück zugewandt ist und in die das Zwischenfügestück im zusammengefügten Zustand des Kolbens jeweils an der ersten Fügestelle und der zweiten Fügestelle eingreift.

Vorteilhaft kann vorgesehen sein, dass das Kolbenhemd und/oder die Kolbenkrone jeweils einen umlaufenden Steg und/oder einen umlaufenden Bund aufweisen, die derart radial zur Achse des Kolbenhemdes und/oder der Kolbenkrone bezüglich des Zwischenfügestückes weiter innen oder weiter außen angeordnet sind, sodass bei Einssetzen des Zwischenfügestückes das Kolbenhemd und/oder das Zwischenfügestück und/oder die Kolbenkrone koaxial zueinander ausgerichtet sind.

Eine Möglichkeit die Verbindung zwischen Kolbenkrone und Kolbenhemd bzw. Kolbenkrone, Zwischenstück und Kolbenhemd einfach und sicher herstellen zu können, sieht vor, dass die Fügestelle oder die erste Fügestelle und die zweite Fügestelle durch Anwendung eines thermischen Prozesses, insbesondere durch Laserschweißen, Elektronenstrahlschweißen oder Reibschweißen, derart verändert ist, dass eine stoffschlüssige Verbindung zwischen der Kolbenkrone und/oder dem Kolbenhemd und/oder dem Zwischenfügestück ausgebildet ist.

Um eine besonders hohe Gasdichtheit des Kolbens zu erreichen, kann vorgesehen sein, dass die jeweilige Fügestelle, insbesondere alle Fügestellen, als am Außenumfang und/oder Innenumfang des gefügten Kolbens umlaufende Fügenaht, insbesondere Schweißnaht, ausgebildet ist.

Der Werkstoffgradient des Kolbens bzw. des Zwischenfügestückes kann vorteilhaft verwirklicht bzw. hergestellt werden, indem der Werkstoffgradient des Kolbens, insbesondere des Zwischenfügestückes, vom Werkstoff des Kolbenhemdes zum Werkstoff der Kolbenkrone durch Ausbildung einer intermetallischen Phase während eines thermischen- und/oder druckgetriebenen Herstellungsprozesses, insbesondere durch Walzplattieren oder Walzschweißplattierung, ausgebildet ist.

Gemäß einem weiteren Aspekt der Erfindung ist ein Zwischenfügestück zur Verbindung eines Kolbenhemdes mit einer Kolbenkrone eines Kolbens vorgesehen, wobei das Zwischenfügestück einen Werkstoffgradienten von einem höherfesten, spezifisch dichteren ersten Werkstoff zu einem geringerfesten, spezifisch weniger dichten zweiten Werkstoff aufweist, wobei der erste Werkstoff eine Stahllegierung ist, bevorzugt ein Stahl aus der Gruppe MoCr4, 42CrMo4, CrMo4, 31CrMoV6 oder 25MoCr4, und wobei der zweite Werkstoff eine Aluminiumlegierung oder eine Aluminiumsiliziumlegierung ist, bevorzugt aus der Gruppe AlSi12CuMgNi, AlSi16CuMgNi, AlSi18CuMgNi, AlSi25CuMgNi, AlSi12Cu3Ni2Mg oder AlSi15Cu3Ni2Mg, wobei das Zwischenfügestück insbesondere einen Werkstoffgradienten vom Werkstoff des Kolbenhemdes zum Werkstoff der Kolbenkrone aufweist.

Durch das Zwischenfügestück kann der Werkstoffgradient einfach hergestellt werden und so ein Kolbenbausatz bestehend aus Zwischenfügestück, Kolbenhemd und Kolbenkrone bereit gestellt werden, der einerseits einfach verbunden werden kann und zweitens die Vorteile der hochfesten Kolbenkrone mit den Vorteilen eines leichten bzw. spezifisch geringer dichten Kolbenhemdes vereint.

Vorteilhaft ist vorgesehen, das Zwischenfügestück ein erstes Ende und ein zweites Ende aufweist, die an einander gegenüberliegenden Stirnseiten des Zwischenfügestückes angeordnet sind, wobei das Zwischenfügestück vom ersten Ende zum zweiten Ende einen Werkstoffgradienten vom ersten Werkstoff zum zweiten Werkstoff, insbesondere vom Werkstoff der Kolbenkrone zum Werkstoff des Kolbenhemdes, aufweist, und wobei das Zwischenfügestück mit dem ersten Ende, das den ersten Werkstoff, insbesondere den Werkstoff der Kolbenkrone, aufweist, mit der Kolbenkrone an einer ersten Fügestelle stoffschlüssig verbindbar ist, und dass das Zwischenfügestück mit dem zweiten Ende, das den zweiten Werkstoff, insbesondere den Werkstoff des Kolbenhemdes, aufweist, mit dem Kolbenhemd an einer zweiten Fügestelle stoffschlüssig verbindbar ist.

Ein weiterer Aspekt der Erfindung sieht vor, ein Verfahren zur Herstellung eines erfindungsgemäßen Kolbens zum Einsatz in Verbrennungskraftmaschinen bereit zu stellen, bei dem die Kolbenkrone und das Kolbenhemd des Kolbens koaxial zueinander ausgerichtet werden und an der Fügestelle aneinander angelegt werden, wobei zwischen Kolbenkrone und Kolbenhemd ein, insbesondere erfindungsgemäßes, Zwischenfügestück eingelegt wird,
- vorzugsweise Einlegen des Fortsatzes, insbesondere des Bundes, in die Ausnehmung,
- Herstellen der stoffschlüssigen Verbindung von Kolbenkrone und Kolbenhemd an der Fügestelle, durch einen stark konzentrierten Eintrag thermischer Energie.

Um einen Kolben bestehend aus Kolbenkrone, Kolbenhemd und Zwischenstück einfach herzustellen, kann vorgesehen sein, dass das Zwischenfügestück durch Laserschweißen, Elektronenstrahlschweißen oder Reibschweißen mit der Kolbenkrone und dem Kolbenhemd stoffschlüssig verbunden wird.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

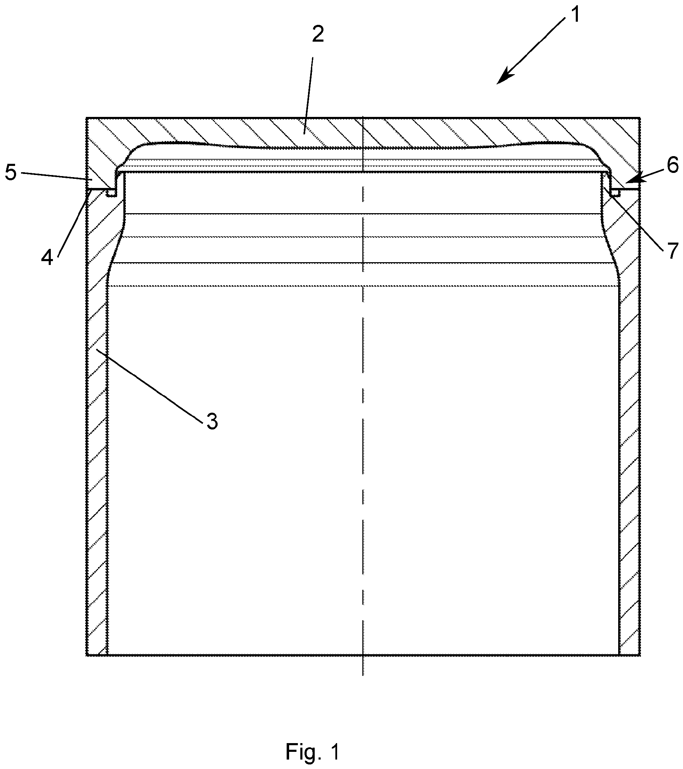

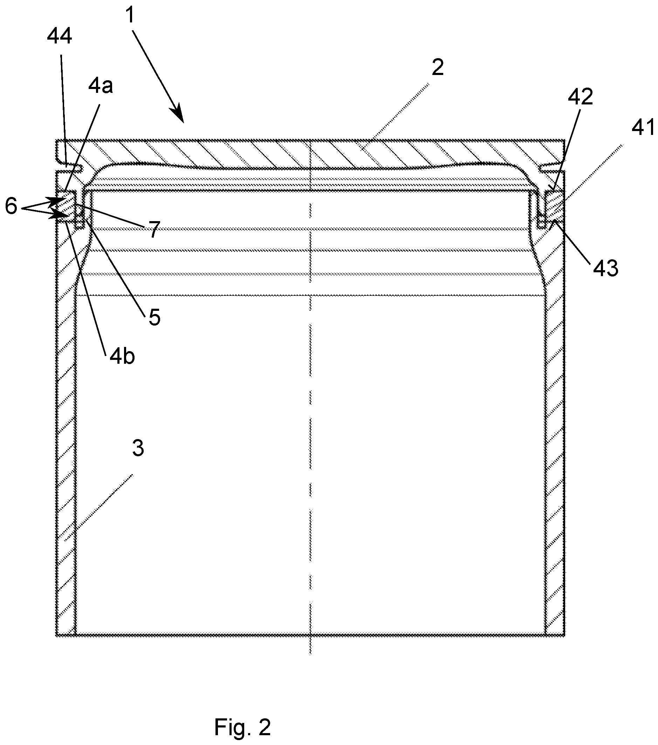

Fig. 1 zeigt ein Beispiel eines Kolbens in einer Schnittansicht und Fig. 2 zeigt eine erste Ausführungsform eines erfindungsgemäßen Kolbens mit Kolbenkrone, Zwischenfügestück und Kolbenhemd.

In Fig. 1 ist ein Beispiel eines Kolbens 1 in einer Schnittansicht dargestellt. Der Kolben 1 weist eine zylindrische Ausbildung auf und umfasst eine Kolbenkrone 2 und ein Kolbenhemd 3. Die Kolbenkrone 2 und das Kolbenhemd 3 sind an einer Fügestelle 4 miteinander stoffschlüssig verbunden. Die Kolbenkrone 2 ist aus einem unterschiedlichen Werkstoff als das Kolbenhemd 3 ausgebildet, wobei der Werkstoff der Kolbenkrone 2 aus einem höher festen, spezifisch dichteren Werkstoff als das Kolbenhemd 3 ausgebildet ist. Beispielsweise ist wie bei dieser Ausführungsform die Kolbenkrone 2 aus einer Stahllegierung hergestellt und das Kolbenhemd 3 aus einer Aluminium-Silizium-Legierung. Das Kolbenhemd 3 weist im Bereich der Fügestelle 4 einen Werkstoffgradienten vom Werkstoff des Kolbenhemdes 3 zum Werkstoff der Kolbenkrone 2 hin auf. Somit ist das Kolbenhemd 3 beinahe vollständig aus einer Aluminium-Silizium-Legierung und weist im Bereich der Fügestelle 4 einen prozentuell abnehmenden Anteil der Aluminium-Silizium-Legierung auf und einen steigenden Anteil der Stahllegierung bzw. des Werkstoffes der Kolbenkrone 2 auf, sodass an der Fügestelle 4, an dem das Kolbenhemd 3 mit der Kolbenkrone 2 verbunden ist, nur mehr der Werkstoff der Kolbenkrone 2, also die Stahllegierung der Kolbenkrone 2, vorliegt.

Alternativ kann auch die Kolbenkrone 2 einen Werkstoffgradienten aufweisen, der analog zu dem Kolbenhemd 3 im Bereich der Fügestelle 4 zum Kolbenhemd 3 hin prozentuell abnehmend den Werkstoff der Kolbenkrone 2 und prozentuell ansteigend den Werkstoff des Kolbenhemdes 3 aufweist.

Das Kolbenhemd 3 weist eine umlaufende Ausnehmung 6 auf, die an der der Kolbenkrone 2 zugewandten Seite des Kolbenhemdes 3 angeordnet ist. Die Kolbenkrone 2 weist einen umlaufenden Fortsatz, der bei dieser Ausführungsform als Bund 5 ausgebildet ist, auf, der an der dem Kolbenhemd 3 zugewandten Seite der Kolbenkrone 2 angeordnet ist. Der Fortsatz bzw. Bund 5 der Kolbenkrone 2 ist zur Ausnehmung 6 des Kolbenhemdes 3 gegengleich ausgebildet und erlaubt bei Zusammenfügen der Kolbenkrone 2 mit dem Kolbenhemd 3 eine koaxiale Ausrichtung des Kolbenhemdes 3 zur Kolbenkrone 2 an der Fügestelle 4. Der Bund 5 greift dabei in die Ausnehmung 6 des Kolbenhemdes 3 ein und ermöglicht so eine genaue und einfache Positionierung bzw. Herstellung der stoffschlüssigen Verbindung zwischen Kolbenkrone 2 und Kolbenhemd 3. Das Kolbenhemd 3 weist weiters einen umlaufenden Steg 7 auf, der radial zur Achse des Kolbenhemdes 3 bezüglich der Ausnehmung 6 weiter innen angeordnet ist und so ein Verrutschen der Kolbenkrone zum Kolbenhemd 3 verhindert. Alternativ kann der Fortsatz bzw. der Bund 5 auch am Kolbenhemd 3 vorgesehen sein und die Ausnehmung 6 an der Kolbenkrone 2. Weiters kann alternativ auch der umlaufende Steg 7 an der Kolbenkrone 2 vorgesehen sein. Der Steg 7 und der Bund 5 können optional gemeinsam eine Übermaßpassung bzw. eine Restpassung verwirklichen und so eine vor dem Fügeprozess reibschlüssige Verbindung herstellen, um die Vorpositionierung der Bauteile des Kolben 1 zu erleichtern. Die Kolbenkrone 2 kann mit dem Kolbenhemd 3 wie bei der ersten Ausführungsform der Fig. 1 durch Laserverschweißen stoffschlüssig verbunden werden, indem eine am Kolben 1 umlaufende Fügenaht bzw. Schweißnaht ausgebildet wird. Alternativ kann das Kolbenhemd 3 auch mit der Kolbenkrone 2 durch Elektronenstrahlschweißen oder Reibschweißen vorteilhaft verbunden werden. Alternativ können auch andere Verbindungsverfahren, die aus dem Stand der Technik bekannt sind, vorgesehen sein, wobei vorteilhaft thermische Prozesse zur Anwendung kommen.

In Fig. 2 ist eine erste Ausführungsform des erfindungsgemäßen Kolben 1 in einer Schnittansicht entlang der Achse des zylindrisch ausgebildeten Kolbens 1 dargestellt. Der Kolben 1 ist dreiteilig ausgebildet und umfasst eine Kolbenkrone 2, ein Kolbenhemd 3 und ein Zwischenfügestück 41. Das Zwischenfügestück 41 ist zwischen Kolbenhemd 3 und Kolbenkrone 2 angeordnet. Das Zwischenfügestück 41 ist ringförmig ausgebildet und weist entlang der Achse einen Werkstoffgradienten vom Werkstoff des Kolbenhemdes 3 zum Werkstoff der Kolbenkrone 2 hin auf. Die Kolbenkrone 2 ist aus einem höherfesten, spezifisch dichteren Werkstoff als das Kolbenhemd 3 ausgebildet, wobei bei der in Fig. 2 dargestellten Ausführungsform das Kolbenhemd 3 aus einer Aluminium-Silizium-Legierung und die Kolbenkrone 2 aus einem Schmiedestahlwerkstoff besteht. Das Zwischenfügestück 41 weist ein erstes Ende 42 und ein zweites Ende 43 auf, die jeweils an gegenüberliegenden Stirnseiten des ringförmig ausgebildeten Zwischenstückes 41 angeordnet sind. Der Werkstoffgradient des Zwischenfügestückes 41 verläuft dabei vom ersten Ende 42, an dem der Werkstoff der Kolbenkrone 2 vollständig ausgebildet ist, zum zweiten Ende 43, an dem der Werkstoff des Kolbenhemdes 3 vollständig ausgebildet ist. So ist entlang der Höhe des ringförmig ausgebildeten Zwischenfügestückes 41 vom ersten Ende 42 zum zweiten Ende 43 der Werkstoff der Kolbenkrone 2 prozentuell abnehmend ausgebildet, wobei prozentuell der Anteil des Werkstoffes des Kolbenhemdes 3 ansteigt. Somit ist am ersten Ende 42 der Werkstoff der Kolbenkrone 2 zu 100% vorhanden und am zweiten Ende 43 des Zwischenfügestückes 41 der Werkstoff des Kolbenhemdes 3 zu 100% vorhanden. Das Zwischenfügestück 41 ist an seinem ersten Ende 42 an einer ersten Fügestelle 4a stoffschlüssig mit der Kolbenkrone 2 verbunden und am zweiten Ende 43 mit dem Kolbenhemd 3 an einer zweiten Fügestelle 4b ebenfalls stoffschlüssig verbunden.

Das Kolbenhemd 3 weist einen Bund 5 und die Kolbenkrone 2 einen Steg 7 auf. Der Bund 5 des Kolbenhemdes 3 ist radial zur Achse des Kolbenhemdes 3 und der Kolbenkrone 2 gesehen weiter innen als der Steg 7 der Kolbenkrone 2 angeordnet, sodass diese bei Einlegen der Kolbenkrone 2 in den Bund 5 des Kolbenhemdes 3 aneinander anliegen und die Kolbenkrone 2 und das Kolbenhemd 3 so koaxial zueinander angeordnet sind. Die Kolbenkrone 2 und das Kolbenhemd 3 weisen weiters eine zum Zwischenfügestück 41 gegengleich ausgebildete Ausnehmung 6 auf, in die das Zwischenfügestück 41 eingelegt ist, wobei das Zwischenfügestück 41 mit dem ersten Ende 42 in die Ausnehmung 6 der Kolbenkrone 2 an der ersten Fügestelle 4a eingreift und das Zwischenfügestück 41 mit dem zweiten Ende 43 in der Ausnehmung 6 des Kolbenhemdes 3 an einer zweiten Fügestelle 4b eingreift.

Das Zwischenfügestück 41 ist an der ersten Fügestelle 4a mit der Kolbenkrone 2 und an der zweiten Fügestelle 4b mit dem Kolbenhemd 3 jeweils durch Laserschweißen stoffschlüssig verbunden. Die Laserschweißnaht lauft dabei um den Kolben 1 vollständig um und trennt somit den Innenraum des Kolbens 1 von der Umgebung des Kolbens 1 gasdicht. Alternativ können die Fügestelle 4a und die Fügestelle 4b auch durch Reibschweißen, Elektrodenstrahlschweißen oder andere thermische Prozesse oder aus dem Stand der Technik bekannte Fügeverfahren eine stoffschlüssige Verbindung des Kolbenhemdes 3 des Zwischenfügestückes 41 und der Kolbenkrone 2 herstellen. Die Fügenaht bzw. Schweißnaht kann dabei am Außenumfang oder am Innenumfang des gefügten Kolbens 1 umlaufen.

Die Fügestelle 4 bzw. die erste Fügestelle 4a und die zweite Fügestelle 4b sind, wie in Fig. 2 dargestellt, in Richtung des Kurbelgehäuses unterhalb einer Kolbenringnut 44 an der Kolbenkrone 2 bzw. dem Kolbenhemd 3 angeordnet, sodass sich die Kolbenringnut 44 in der Kolbenkrone befindet.

Der Werkstoffgradient des Kolbens 1 bzw. des Zwischenstückes 41 vom Werkstoff des Kolbenhemdes zum Werkstoff der Kolbenkrone hin wird bei den in Fig. 1 und 2 dargestellten Ausführungsformen durch Ausbildung einer intermetallischen Phase während eines thermischen und druckgetriebenen Herstellungsprozesses ausgebildet. Der Werkstoffgradient kann dabei beispielsweise durch Plattieren oder Walzplattieren bzw. Walzschweißplattierung hergestellt werden. So können beispielsweise die Werkstoffe der Kolbenkrone 2 und des Kolbenhemdes 3 durch Einwirkung von Druck und Temperatur und eventuell nachfolgender Wärmebehandlung miteinander verbunden werden. Alternativ kann auch der Werkstoff des Kolbenhemdes 3 z.B. eine Aluminium-Silizium-Legierung, auf den Werkstoff der Kolbenkrone 2, z.B. einer Stahllegierung, aufgewalzt werden bzw. auf diesen mittels einer Walzschweißplattierung angelagert werden und so der Werkstoffgradient des Zwischenfügestückes 41 bzw. des Kolbenhemdes 3 oder der Kolbenkrone 2 hergestellt werden. Ebenfalls können andere aus dem Stand der Technik bekannte Verfahren zur Herstellung des Werkstoffgradienten des Zwischenfügestückes 41 bzw. des Kolben 1 zur Anwendung kommen und der Werkstoffgradient anderer Werkstoffe durch Walzplattieren oder Walzschweißplattierung hergestellt werden.

Im Folgenden wird ein beispielhaftes Verfahren zur Herstellung eines Kolbens 1 zum Einsatz in Verbrennungskraftmaschinen beschrieben:
Beispielsweise wird der in Fig. 1 dargestellte Kolben 1 durch Positionierung der Kolbenkrone 2 zum Kolbenhemd 3 vorgefertigt, indem die Kolbenkrone 2 und das Kolbenhemd 3 koaxial zueinander ausgerichtet und an der Fügestelle 4 aneinander angelegt werden. Optional kann, wie beschrieben, auch eine Pressverbindung zwischen Kolbenhemd 3 und Kolbenkrone 2 hergestellt werden und das Kolbenhemd 3 und die Kolbenkrone 2 an der Fügestelle 4 vorgefügt werden. Hier kann beispielsweise der Bund 5 der Kolbenkrone 2 in die Ausnehmung 6 des Kolbenhemdes 3 eingelegt werden und so die Vorpositionierung bzw. die koaxiale Positionierung der Kolbenkrone 2 zum Kolbenhemd 3 erreicht werden. In einem weiteren Schritt wird dann die stoffschlüssige Verbindung der Kolbenkrone 2 mit dem Kolbenhemd 3 an der Fügestelle 4, beispielsweise durch Laserschweißen, Elektrodenschweißen oder Reibschweißen hergestellt, und der Kolben 1 bestehend aus zwei unterschiedlichen Werkstoffen hergestellt. Optional kann dann eine nachfolgende Wärmebehandlung oder Nachbearbeitung des gefügten Kolbens 1 erfolgen.

Erfindungsgemäß kann ein dreiteiliger Kolben 1 bestehend aus Kolbenhemd 3, Kolbenkrone 2 und Zwischenfügestück 41 folgendermaßen hergestellt werden:
Die Kolbenkrone 2 wird zum Kolbenhemd 3 koaxial ausgerichtet und beispielsweise durch einen Bund 5 und einen Steg 7 miteinander in einer Pressverbindung vorgefügt werden. Das Zwischenfügestück 41 wird dann in die Ausnehmungen 6 des Kolbenhemdes 3 oder der Kolbenkrone 2 eingelegt, sodass das erste Ende 42 des Zwischenfügestückes 41 an einer ersten Fügestelle 4a an der Kolbenkrone 2 und das zweite Ende 43 des Zwischenfügestückes 41 an der zweiten Fügestelle 4b an dem Kolbenhemd 3 anliegt. Anschließend wird durch Reibschweißen, Elektronenstrahlschweißen oder Laserstrahlschweißen dann die Verbindung zwischen Zwischenfügestück 41 und der Kolbenkrone 2 an der ersten Fügestelle 4a und die Verbindung des Zwischenfügestückes 41 mit dem Kolbenhemd 3 an der zweiten Fügestelle 4b hergestellt.

Bevorzugte Werkstoffe der Kolbenkrone 2 sind Stahllegierungen, vorzugsweise Stahlegierungen mit einem Stahl aus der Gruppe MoCr4, 42CrMo4, CrMo4, 31CrMoV6 oder 25MoCr4.

Bevorzugte Werkstoffe für das Kolbenhemd 3 sind Aluminiumlegierungen oder Aluminiumsiliziumlegierung, bevorzugt aus der Gruppe AlSi12CuMgNi, AlSi16CuMgNi, AlSi18CuMgNi, AlSi25CuMgNi, AlSi12Cu3Ni2Mg oder AlSi15Cu3Ni2Mg.

## Patentansprüche

1. Kolben (1) zum Einsatz in Verbrennungskraftmaschinen, wobei der Kolben (1) eine Kolbenkrone (2) und ein Kolbenhemd (3) aufweist, die jeweils aus unterschiedlichen Werkstoffen bestehen, wobei die Kolbenkrone (2) aus einem höherfesten, spezifisch dichteren Werkstoff als das Kolbenhemd (3) besteht, **dadurch gekennzeichnet,**
**dass** die Kolbenkrone (2) und das Kolbenhemd (3) an zumindest einer Fügestelle (4) stoffschlüssig miteinander verbunden sind, wobei die Kolbenkrone (2) aus einer Stahllegierung besteht und das Kolbenhemd (3) aus einer Aluminiumlegierung oder einer Aluminiumsiliziumlegierung besteht, und wobei der Kolben (1) ein, insbesondere ringförmiges, Zwischenfügestück (41) aufweist, das zwischen Kolbenhemd (3) und Kolbenkrone (2) angeordnet ist, wobei das Zwischenfügestück (41) ein erstes Ende (42) und ein zweites Ende (43) aufweist, wobei das Zwischenfügestück (41) vom ersten Ende (42) zum zweiten Ende (43) einen Werkstoffgradienten vom Werkstoff der Kolbenkrone (2) zum Werkstoff des Kolbenhemdes (3) aufweist, wobei das Zwischenfügestück (41) mit dem ersten Ende (42), das den Werkstoff der Kolbenkrone (2) aufweist, mit der Kolbenkrone (2) an einer ersten Fügestelle (4a) stoffschlüssig verbunden ist, und wobei das Zwischenfügestück (41) mit dem zweiten Ende (43), das den Werkstoff des Kolbenhemdes (3) aufweist, mit dem Kolbenhemd (3) an einer zweiten Fügestelle (4b) stoffschlüssig verbunden ist.

2. Kolben (1) nach Anspruch 1, **dadurch gekennzeichnet, dass** die Kolbenkrone (2) aus einem Stahl aus der Gruppe MoCr4, 42CrMo4, CrMo4, 31CrMoV6 oder 25MoCr4 besteht.

3. Kolben (1) nach einem der vorangehenden Ansprüche, **dadurch gekennzeichnet, dass** das Kolbenhemd (3) aus einer Aluminiumlegierung oder einer Aluminiumsiliziumlegierung aus der Gruppe AlSi12CuMgNi, AISi16CuMgNi, AISi18CuMgNi, AISi25CuMgNi, AlSi12Cu3Ni2Mg oder AlSi15Cu3Ni2Mg besteht.

4. Kolben (1) nach einem der vorangehenden Ansprüche, **dadurch gekennzeichnet, dass** der Kolben (1), vorzugsweise das Kolbenhemd (3) oder die Kolbenkrone (2) im Bereich der Fügestelle (4) einen Werkstoffgradienten vom Werkstoff des Kolbenhemdes (3) zum Werkstoff der Kolbenkrone (2) aufweist.

5. Kolben (1) nach einem der vorangehenden Ansprüche, **dadurch gekennzeichnet, dass** die Kolbenkrone (2) einen umlaufenden Fortsatz, insbesondere einen Bund (5), aufweist,
der an der dem Kolbenhemd (3) zugewandten Seite der Kolbenkrone (2) angeordnet ist, wobei das Kolbenhemd (3) eine dem Fortsatz der Kolbenkrone (2) gegengleich, insbesondere koaxial zum Fortsatz, ausgebildete Ausnehmung (6) aufweist, die der Kolbenkrone (2) zugewandt ist und in die der Fortsatz, insbesondere der Bund (5), im zusammengefügten Zustand des Kolbens (1) an der Fügestelle (4) eingreift oder
dass das Kolbenhemd (3) einen umlaufenden Fortsatz, insbesondere einen Bund (5), aufweist, der an der Kolbenkrone (2) zugewandten Seite des Kolbenhemdes (3) angeordnet ist, wobei die Kolbenkrone (2) eine dem Fortsatz des Kolbenhemdes (3) gegengleich, insbesondere koaxial zum Fortsatz, ausgebildete Ausnehmung (6) aufweist, die dem Kolbenhemd (3) zugewandt ist und in die der Fortsatz, insbesondere der Bund (5), im zusammengefügten Zustand des Kolbens (2) an der Fügestelle (4) eingreift.

6. Kolben (1) nach Anspruch 5, **dadurch gekennzeichnet, dass** das Kolbenhemd (3) oder die Kolbenkrone (2) einen umlaufenden Steg (7) aufweist der derart radial zur Achse des Kolbenhemdes (3) oder der Kolbenkrone (2) bezüglich der Ausnehmung (6) weiter innen oder weiter außen angeordnet ist, sodass bei Einssetzen des Fortsatzes, insbesondere des Bundes (5), das Kolbenhemd (3) zu der Kolbenkrone (2) koaxial angeordnet ist.

7. Kolben (1) nach einem der vorangehenden Ansprüche, **dadurch gekennzeichnet, dass** die Kolbenkrone (2) und/oder das Kolbenhemd (3) eine dem Zwischenfügestück (41) gegengleich ausgebildete Ausnehmung (6) aufweist, die dem Zwischenfügestück (41) zugewandt ist und in die das Zwischenfügestück (41) im zusammengefügten Zustand des Kolbens (1) jeweils an der ersten Fügestelle (4a) und der zweiten Fügestelle (4b) eingreift.

8. Kolben (1) nach einem der vorangehenden Ansprüche, **dadurch gekennzeichnet, dass** das Kolbenhemd (3) und/oder die Kolbenkrone (2) jeweils einen umlaufenden Steg (7) und/oder einen umlaufenden Bund (5) aufweisen, die derart radial zur Achse des Kolbenhemdes (3) und/oder der Kolbenkrone (2) bezüglich des Zwischenfügestückes (41) weiter innen oder weiter außen angeordnet sind, sodass bei Einssetzen des Zwischenfügestückes (41) das Kolbenhemd (3) und/oder das Zwischenfügestück (41) und/oder die Kolbenkrone (2) koaxial zueinander ausgerichtet sind.

9. Kolben (1) nach einem der vorangehenden Ansprüche, **dadurch gekennzeichnet, dass** die Fügestelle (4) oder die erste Fügestelle (4a) und die zweite Fügestelle (4b) durch Anwendung eines thermischen Prozesses, insbesondere durch Laserschweißen, Elektronenstrahlschweißen oder Reibschweißen, derart verändert ist, dass eine stoffschlüssige Verbindung zwischen der Kolbenkrone (2) und/oder dem Kolbenhemd (3) und/oder dem Zwischenfügestück (41) ausgebildet ist.

10. Kolben (1) nach einem der vorangehenden Ansprüche, **dadurch gekennzeichnet, dass** die jeweilige Fügestelle (4, 4a, 4b), insbesondere alle Fügestellen (4, 4a, 4b), als am Außenumfang und/oder Innenumfang des gefügten Kolbens (1) umlaufende Fügenaht, insbesondere Schweißnaht, ausgebildet ist.

11. Kolben (1) nach einem der vorangehenden Ansprüche, **dadurch gekennzeichnet, dass** der Werkstoffgradient des Kolbens (1), insbesondere des Zwischenfügestückes (41), vom Werkstoff des Kolbenhemdes (3) zum Werkstoff der Kolbenkrone (2) durch Ausbildung einer intermetallischen Phase während eines thermischen- und/oder druckgetriebenen Herstellungsprozesses, insbesondere durch Walzplattieren oder Walzschweißplattierung, ausgebildet ist.

12. Zwischenfügestück (41) zur Verbindung eines Kolbenhemdes (3) mit einer Kolbenkrone (2) eines Kolben (1), insbesondere nach einem der Patentansprüche 1 bis 11, **dadurch gekennzeichnet, dass** das Zwischenfügestück (41) einen Werkstoffgradienten von einem höherfesten, spezifisch dichteren ersten Werkstoff zu einem geringerfesten, spezifisch weniger dichten zweiten Werkstoff aufweist, wobei der erste Werkstoff eine Stahllegierung ist, bevorzugt ein Stahl aus der Gruppe MoCr4, 42CrMo4, CrMo4, 31CrMoV6 oder 25MoCr4, , und wobei der zweite Werkstoff eine Aluminiumlegierung oder eine Aluminiumsiliziumlegierung ist, bevorzugt aus der Gruppe AISi12CuMgNi, AISi16CuMgNi, AISi18CuMgNi, AISi25CuMgNi, AISi12Cu3Ni2Mg oder AlSi15Cu3Ni2Mg,, wobei das Zwischenfügestück (41) insbesondere einen Werkstoffgradienten vom Werkstoff des Kolbenhemdes (3) zum Werkstoff der Kolbenkrone (2) aufweist.

13. Zwischenfügestück (41) nach Anspruch 12, **dadurch gekennzeichnet, dass** das Zwischenfügestück (41) ringförmig ausgebildet ist, wobei das Zwischenfügestück (41) ein erstes Ende (42) und ein zweites Ende (43) aufweist, die an einander gegenüberliegenden Stirnseiten des Zwischenfügestücks (41) angeordnet sind, wobei das Zwischenfügestück (41) vom ersten Ende (42) zum zweiten Ende (43) einen Werkstoffgradienten vom ersten Werkstoff zum zweiten Werkstoff, insbesondere vom Werkstoff der Kolbenkrone (2) zum Werkstoff des Kolbenhemdes (3), aufweist, und wobei das Zwischenfügestück (41) mit dem ersten Ende (42), das den ersten Werkstoff, insbesondere den Werkstoff der Kolbenkrone (2), aufweist, mit der Kolbenkrone (2) an einer ersten Fügestelle (4a) stoffschlüssig verbindbar ist, und dass das Zwischenfügestück (41) mit dem zweiten Ende (43), das den zweiten Werkstoff, insbesondere den Werkstoff des Kolbenhemdes (3), aufweist, mit dem Kolbenhemd (3) an einer zweiten Fügestelle (4b) stoffschlüssig verbindbar ist.

14. Verfahren zur Herstellung eines Kolbens (1) zum Einsatz in Verbrennungskraftmaschinen gemäß einem der Ansprüche 1 bis 11, gekennzeichnet, dass die Kolbenkrone (2) und das Kolbenhemd (3) des Kolbens (1) koaxial zueinander ausgerichtet werden und an der Fügestelle (4) aneinander angelegt werden, wobei zwischen Kolbenkrone (2) und Kolbenhemd (3) ein Zwischenfügestück (41), insbesondere nach einem der Ansprüche 12 oder 13, eingelegt wird,
- vorzugsweise Einlegen des Fortsatzes, insbesondere des Bundes (5), in die Ausnehmung (6),
- Herstellen der stoffschlüssigen Verbindung von Kolbenkrone (2) und Kolbenhemd (3) an der Fügestelle (4), durch einen stark konzentrierten Eintrag thermischer Energie.

15. Verfahren nach Anspruch 14, **dadurch gekennzeichnet, dass** das Zwischenfügestück (41) durch Laserschweißen, Elektronenstrahlschweißen oder Reibschweißen mit der Kolbenkrone (2) und dem Kolbenhemd (3) stoffschlüssig verbunden wird.

## Claims

1. Piston (1) for use in internal combustion engines, wherein the piston (1) comprises a piston crown (2) and a piston skirt (3), each of which consists of different materials, wherein the piston crown (2) consists of a higher-strength, specifically denser material than the piston skirt (3), **characterised in that**
the piston crown (2) and the piston skirt (3) are connected to each other in a bonded manner at least at one joint (4), wherein the piston crown (2) consists of a steel alloy and the piston skirt (3) consists of an aluminium alloy or an aluminium-silicon alloy, and wherein the piston (1) comprises an, in particular annular, intermediate joining piece (41), which is arranged between piston skirt (3) and piston crown (2), wherein the intermediate joining piece (41) has a first end (42) and a second end (43), wherein, from the first end (42) to the second end (43), the intermediate joining piece (41) has a material gradient from the material of the piston crown (2) to the material of the piston skirt (3), wherein the intermediate joining piece (41) is connected in a bonding manner by the first end (42), which comprises the material of the piston crown (2), to the piston crown (2) at a first joint (4a), and wherein the intermediate joining piece (41) is connected in a bonded manner by the second end (43), which comprises the material of the piston skirt (3), to the piston skirt (3) at a second joint (4b).

2. Piston (1) according to claim 1, **characterised in that** the piston crown (2) consists of a steel from the group MoCr4, 42CrMo4, CrMo4, 31CrMoV6 or 25MoCr4.

3. Piston (1) according to any one of the preceding claims, **characterised in that** the piston skirt (3) consists of an aluminium alloy or an aluminium-silicon alloy from the group AlSi12CuMgNi, AlSi16CuMgNi, AlSi18CuMgNi, AISi25CuMgNi, AlSi12Cu3Ni2Mg or AlSi15Cu3Ni2Mg.

4. Piston (1) according to any one of the preceding claims, **characterised in that** in the region of the joint (4) the piston (1), preferably the piston skirt (3) or the piston crown (2), has a material gradient from the material of the piston skirt (3) to the material of the piston crown (2).

5. Piston (1) according to any one of the preceding claims, **characterised in that** the piston crown (2) comprises a circumferential extension, in particular a collar (5), which is arranged on the side of the piston crown (2) facing the piston skirt (3), wherein the piston skirt (3) comprises a recess (6) formed opposite the extension of the piston crown (2), in particular coaxial to the extension, which is facing the piston crown (2) and into which the extension, in particular the collar (5), engages in the joined state of the piston (1) at the joint (4), or
**in that** the piston skirt (3) comprises a circumferential extension, in particular a collar (5), which is arranged on the side of the piston skirt (3) facing the piston crown (2), wherein the piston crown (2) comprises a recess (6) formed opposite the extension of the piston skirt (3), in particular coaxial to the extension, which is facing the piston skirt (3) and into which the extension, in particular the collar (5), engages in the joined state of the piston (2) at the joint (4).

6. Piston (1) according to claim 5, **characterised in that** the piston skirt (3) or the piston crown (2) comprises a circumferential ridge (7) which, radially to the axis of the piston skirt (3) or the piston crown (2), is arranged further in or further out with respect to the recess (6), such that on inserting the extension, in particular the collar (5), the piston skirt (3) is arranged coaxial to the piston crown (2).

7. Piston (1) according to any one of the preceding claims, **characterised in that** the piston crown (2) and/or the piston skirt (3) comprises a recess (6) formed opposite the intermediate joining piece (41), which is facing the intermediate joining piece (41) and in which the intermediate joining piece (41) engages, in the joined state of the piston (1) both at the first joint (4a) and at the second joint (4b).

8. Piston (1) according to any one of the preceding claims, **characterised in that** the piston skirt (3) and/or the piston crown (2) comprises a circumferential ridge (7) and/or a circumferential collar (5) which, radially to the axis of the piston skirt (3) and/or the piston crown (2), is arranged further in or further out with respect to the intermediate joining piece (41), such that on inserting the intermediate joining piece (41), the piston skirt (3) and/or the intermediate joining piece (41) and/or the piston crown (2) are orientated coaxial to one another.

9. Piston (1) according to any one of the preceding claims, **characterised in that** the joint (4), or the first joint (4a) and the second joint (4b), is changed through application of a thermal process, in particular by laser welding, electron beam welding or friction welding, in such a way that a bonded connection is formed between the piston crown (2) and/or the piston skirt (3) and/or the intermediate joining piece (41) .

10. Piston (1) according to any one of the preceding claims, **characterised in that** the respective joint (4, 4a, 4b), in particular all joints (4, 4a, 4b), are formed as a circumferential joint seam, in particular weld seam, at the outer circumference and/or inner circumference of the joined piston (1).

11. Piston (1) according to any one of the preceding claims, **characterised in that** the material gradient of the piston (1), in particular of the intermediate joining piece (41), from the material of the piston skirt (3) to the material of the piston crown (2), is formed by forming an intermetallic phase during a thermal and/or pressure-driven manufacturing process, in particular by roll plating or roll weld plating.

12. Intermediate joining piece (41) for connecting a piston skirt (3) to a piston crown (2) of a piston (1), in particular according to any one of claims 1 to 11, **characterised in that** the intermediate joining piece (41) has a material gradient from a higher-strength, specifically denser first material, to a lower-strength, specifically less dense second material, wherein the first material is a steel alloy, preferably a steel from the group MoCr4, 42CrMo4, CrMo4, 31CrMoV6 or 25MoCr4, and wherein the second material is an aluminium alloy or an aluminium-silicon alloy preferably from the group AlSi12CuMgNi, AlSi16CuMgNi, AlSi18CuMgNi, AISi25CuMgNi, AlSi12Cu3Ni2Mg or AlSi15Cu3Ni2Mg, wherein the intermediate joining piece (41) has, in particular, a material gradient from the material of the piston skirt (3) to the material of the piston crown (2).

13. Intermediate joining piece (41) according to claim 12, **characterised in that** the intermediate joining piece (41) is annular, wherein the intermediate joining piece (41) has a first end (42) and a second end (43), which are arranged at the opposite end faces of the intermediate joining piece (41), wherein, from the first end (42) to the second end (43), the intermediate joining piece (41) has a material gradient from the first material to the second material, in particular from the material of the piston crown (2) to the material of the piston skirt (3), and wherein the intermediate joining piece (41) can be connected in a bonded manner to the piston crown (2) at a first joint (4a) with the first end (42), which comprises the first material, in particular the material of the piston crown (2), and that the intermediate joining piece (41) can be connected in a bonded manner to the piston skirt (3) at a second joint (4b) with the second end (43), which comprises the second material, in particular the material of the piston skirt (3).

14. Method for producing a piston (1) for use in internal combustion engines according to one of claims 1 to 11, **characterised in that** the piston crown (2) and the piston skirt (3) of the piston (1) are orientated coaxially to one another and abut one another at the joint (4), wherein between piston crown (2) and piston skirt (3) an intermediate joining piece (41) is inserted, in particular according to one of claims 12 or 13,
- preferably inserting the extension, in particular the collar (5), in the recess (6),
- producing the bonded connection from piston crown (2) and piston skirt (3) at the joint (4), by means of a highly concentrated thermal energy input.

15. Method according to claim 14, **characterised in that** the intermediate joining piece (41) is connected in a bonded manner by laser welding, electron beam welding or friction welding to the piston crown (2) and the piston skirt (3).

## Revendications

1. Piston (1) destine à être employé dans des moteurs à combustion interne, dans lequel le piston (1) présente une calotte de piston (2) et une jupe de piston (3) qui sont constituées respectivement de matériaux différents, dans lequel la calotte de piston (2) est constituée d'un matériau à plus haute résistance et spécifiquement plus dense que la jupe de piston (3), **caractérisé en ce**
**que** la calotte de piston (2) et la jupe de piston (3) sont reliées l'une à l'autre par liaison de matière sur au moins un emplacement d'assemblage (4), dans lequel la calotte de piston (2) est constituée d'un alliage en acier et la jupe de piston (3) est constituée d'un alliage d'aluminium ou d'un alliage d'aluminium et de silicium, et dans lequel le piston (1) présente une pièce d'assemblage intermédiaire (41) en particulier de forme annulaire, qui est disposée entre la jupe de piston (3) et la calotte de piston (2), dans lequel la pièce d'assemblage intermédiaire (41) présente une première extrémité (42) et une seconde extrémité (43), dans lequel la pièce d'assemblage intermédiaire (41) présente de la première extrémité (42) vers la seconde extrémité (43) un gradient de matériau du matériau de la calotte de piston (2) vers le matériau de la jupe de piston (3), dans lequel la pièce d'assemblage intermédiaire (41) est reliée par liaison de matière par la première extrémité (42), qui présente le matériau de la calotte de piston (2), à la calotte de piston (2) sur un premier emplacement d'assemblage (4a), et dans lequel la pièce d'assemblage intermédiaire (41) est reliée par liaison de matière par la seconde extrémité (43), qui présente le matériau de la jupe de piston (3), à la jupe de piston (3) sur un deuxième emplacement d'assemblage (4b).

2. Piston (1) selon la revendication 1, **caractérisé en ce que** la calotte de piston (2) est constituée d'un acier issu du groupe MoCr4, 42CrMo4, CrMo4, 31CrMoV6 ou 25MoCr4.

3. Piston (1) selon l'une quelconque des revendications précédentes, **caractérisé en ce que** la jupe de piston (3) est constituée d'un alliage d'aluminium ou d'un alliage d'aluminium et de silicium issu du groupe AlSil2CuMgNi, AlSil6CuMgNi, AlSil8CuMgNi, AlSi25CuMgNi, AlSi12Cu3Ni2Mg ou AlSi15Cu3Ni2Mg.

4. Piston (1) selon l'une quelconque des revendications précédentes, **caractérisé en ce que** le piston (1), de préférence la jupe de piston (3) ou la calotte de piston (2), présente dans la zone de l'emplacement d'assemblage (4), un gradient de matériau du matériau de la jupe de piston (3) vers le matériau de la calotte de piston (2).

5. Piston (1) selon l'une quelconque des revendications précédentes, **caractérisé en ce que** la calotte de piston (2) présente un prolongement périphérique, en particulier un collet (5), qui est disposé sur le côté, tourné vers la jupe de piston (3), de la calotte de piston (2), dans lequel la jupe de piston (3) présente un évidement (6) réalisé de manière diamétralement opposée au prolongement de la calotte de piston (2), en particulier de manière coaxiale par rapport au prolongement, qui est tournée vers la calotte de piston (2) et avec lequel le prolongement, en particulier le collet (5), vient en prise sur l'emplacement d'assemblage (4) dans l'état assemblé du piston (1), ou
**que** la jupe de piston (3) présente un prolongement périphérique, en particulier un collet (5), qui est disposé sur le côté, tourné vers la calotte de piston (2), de la jupe de piston (3), dans lequel la calotte de piston (2) présente un évidement (6) réalisé de manière diamétralement opposée au prolongement de la jupe de piston (3), en particulier de manière coaxiale par rapport au prolongement, qui est tourné vers la jupe de piston (3) et avec lequel le prolongement, en particulier le collet (5), vient en prise sur l'emplacement d'assemblage (4) dans l'état assemblé du piston (2).

6. Piston (1) selon la revendication 5, **caractérisé en ce que** la jupe de piston (3) ou la calotte de piston (2) présente une traverse périphérique (7) qui est disposée davantage à l'intérieur ou davantage à l'extérieur par rapport à l'évidement (6) de telle manière radialement par rapport à l'axe de la jupe de piston (3) ou de la calotte de piston (2) si bien que lors de l'emploi du prolongement, en particulier du collet (5), la jupe de piston (3) est disposée de manière coaxiale par rapport à la calotte de piston (2).

7. Piston (1) selon l'une quelconque des revendications précédentes, **caractérisé en ce que** la calotte de piston (2) et/ou la jupe de piston (3) présentent un évidement (6) réalisé de manière diamétralement opposée à la pièce d'assemblage intermédiaire (41), qui est tourné vers la pièce d'assemblage intermédiaire (41) et avec lequel la pièce d'assemblage intermédiaire (41) vient en prise respectivement sur le premier emplacement d'assemblage (4a) et le deuxième emplacement d'assemblage (4b) dans l'état assemblé du piston (1).

8. Piston (1) selon l'une quelconque des revendications précédentes, **caractérisé en ce que** la jupe de piston (3) et/ou la calotte de piston (2) présentent respectivement une traverse périphérique (7) et/ou un collet périphérique (5) qui sont disposés davantage à l'intérieur ou davantage à l'extérieur par rapport à la pièce d'assemblage intermédiaire (41) de telle manière radialement par rapport à l'axe de la jupe de piston (3) et/ou de la calotte de piston (2) si bien que lors de l'emploi de la pièce d'assemblage intermédiaire (41), la jupe de piston (3) et/ou la pièce d'assemblage intermédiaire (41) et/ou la calotte de piston (2) sont orientées de manière coaxiale les unes par rapport aux autres.

9. Piston (1) selon l'une quelconque des revendications précédentes, **caractérisé en ce que** l'emplacement d'assemblage (4) ou le premier emplacement d'assemblage (4a) et le deuxième emplacement d'assemblage (4b) sont modifiés par application d'un processus thermique, en particulier par soudage au laser, par soudage par faisceaux d'électrons ou par soudage par friction de telle manière qu'une liaison par liaison de matière est réalisée entre la calotte de piston (2) et/ou la jupe de piston (3) et/ou la pièce d'assemblage intermédiaire (41).

10. Piston (1) selon l'une quelconque des revendications précédentes, **caractérisé en ce que** l'emplacement d'assemblage (4, 4a, 4b) respectif, en particulier tous les emplacements d'assemblage (4, 4a, 4b), sont réalisés en tant que cordon d'assemblage périphérique, en particulier cordon de soudure, sur la périphérie extérieure et/ou la périphérie intérieure du piston (1) assemblé.

11. Piston (1) selon l'une quelconque des revendications précédentes, **caractérisé en ce que** le gradient de matériau du piston (1), en particulier de la pièce d'assemblage intermédiaire (41), du matériau de la jupe de piston (3) vers le matériau de la calotte de piston (2), est réalisé par la réalisation d'une phase intermétallique au cours d'un processus de fabrication thermique et/ou sous l'effet d'une pression, en particulier par placage par laminage ou par plaquage par soudage-laminage.

12. Pièce d'assemblage intermédiaire (41) pour relier une jupe de piston (3) à une calotte de piston (2) d'un piston (1), en particulier selon l'une quelconque des revendications 1 à 11, **caractérisée en ce que** la pièce d'assemblage intermédiaire (41) présente un gradient de matériau d'un premier matériau à plus haute résistance, spécifiquement plus dense vers un deuxième matériau à résistance plus basse, spécifiquement moins dense, dans laquelle le premier matériau est un alliage en acier, de manière préférée un acier issu du groupe MoCr4, 42CrMo4, CrMo4, 31CrMoV6 ou 25MoCr4, et dans laquelle le deuxième matériau est un alliage d'aluminium ou un alliage d'aluminium et de silicium, de manière préférée issu du groupe AlSil2CuMgNi, AlSi16CuMgNi, AlSi18CuMgNi, AlSi25CuMgNi, AlSi12Cu3Ni2Mg ou AlSi15Cu3Ni2Mg, dans laquelle la pièce d'assemblage intermédiaire (41) présente en particulier un gradient de matériau du matériau de la jupe de piston (3) vers le matériau de la calotte de piston (2).

13. Pièce d'assemblage intermédiaire (41) selon la revendication 12, **caractérisée en ce que** la pièce d'assemblage intermédiaire (41) est réalisée en forme d'anneau, dans laquelle la pièce d'assemblage intermédiaire (41) présente une première extrémité (42) et une seconde extrémité (43) qui sont disposées sur des côtés frontaux se faisant face les uns les autres de la pièce d'assemblage intermédiaire (41), dans laquelle la pièce d'assemblage intermédiaire (41) de la première extrémité (42) vers la seconde extrémité (43) présente un gradient de matériau du premier matériau vers le deuxième matériau, en particulier du matériau de la calotte de piston (2) vers le matériau de la jupe de piston (3), et dans laquelle la pièce d'assemblage intermédiaire (41) peut être reliée par liaison de matière par la première extrémité (42), qui présente le premier matériau, en particulier le matériau de la calotte de piston (2), à la calotte de piston (2) sur un premier emplacement d'assemblage (4a), et que la pièce d'assemblage intermédiaire (41) peut être reliée par liaison de matière par la seconde extrémité (43), qui présente le deuxième matériau, en particulier le matériau de la jupe de piston (3), à la jupe de piston (3) sur un deuxième emplacement d'assemblage (4b).

14. Procédé pour fabriquer un piston (1) destiné à être employé dans des moteurs à combustion interne selon l'une quelconque des revendications 1 à 11, **caractérisé en ce que** la calotte de piston (2) et la jupe de piston (3) du piston (1) sont orientées de manière coaxiale l'une par rapport à l'autre et sont placées l'une sur l'autre sur l'emplacement d'assemblage (4), dans lequel une pièce d'assemblage intermédiaire (41), en particulier selon l'une quelconque des revendications 12 ou 13, est placée entre la calotte de piston (2) et la jupe de piston (3), comprenant
- de préférence le placement du prolongement, en particulier du collet (5), dans l'évidement (6),
- la fabrication de la liaison par liaison de matière entre la calotte de piston (2) et la jupe de piston (3) sur l'emplacement d'assemblage (4) par un apport fortement concentré en énergie thermique.

15. Procédé selon la revendication 14, **caractérisé en ce que** la pièce d'assemblage intermédiaire (41) est reliée par liaison de matière à la calotte de piston (2) et à la jupe de piston (3) par soudage au laser, par soudage par faisceaux d'électrons ou par soudage par friction.
